# EUROPEAN PATENT APPLICATION

(11) **EP 4 582 318 A1**
(43) Date of publication of application: **09.07.2025**
(21) Application number: 23858914.7
(22) Date of filing: 30.06.2023
(51) Int. Cl.: B60S 5/06

(54) **BATTERY SWAPPING DEVICE, AND BATTERY CHARGING AND SWAPPING STATION COMPRISING SAME**

(30) Priority: 02.09.2022 CN 202211073713
(71) Applicant: Nio Technology (Anhui) Co., Ltd, Hefei City, Anhui 230601 (CN)
(72) Inventor: ZHOU, Xiaohong, Shanghai 201804 (CN); YANG, Chao, Shanghai 201804 (CN); XU, Yucai, Shanghai 201804 (CN); ZHANG, Ning, Shanghai 201804 (CN)
(74) Representative: Vossius & Partner Patentanwälte Rechtsanwälte mbB
(86) International application number: PCT/CN2023/104967
(87) International publication number: WO 2024/045876

(57) **Abstract**

The invention relates to the technical field of battery swapping, in particular to a battery swapping device and a battery charging and swapping station including same for solving the problem of poor compatibility of existing battery swapping devices. To this end, the battery swapping device of the invention includes: a battery bearing platform, and a translation mechanism and a plurality of locking and unlocking mechanisms that are mounted on the battery bearing platform, where the translation mechanism is capable of driving at least some of the locking and unlocking mechanisms to move horizontally relative to the battery bearing platform, so as to enable the plurality of locking and unlocking mechanisms to adapt to traction batteries with different specifications. Through this arrangement, aiming at the batteries with different specifications and sizes, the locking and unlocking mechanisms can be moved to positions matching the batteries with different specifications, aligning the locking and unlocking mechanisms with fasteners of the batteries. Thus, the battery swapping device can mount and dismount a plurality of traction batteries with different specifications and sizes, enhancing the compatibility of the battery swapping device.

## Description

The present application claims the priority to Chinese Patent Application No. CN 202211073713.1 filed on September 02, 2022 and entitled "BATTERY SWAPPING DEVICE AND BATTERY CHARGING AND SWAPPING STATION COMPRISING SAME", which is incorporated herein by reference in its entirety.

### Technical Field

The invention relates to the technical field of battery swapping, in particular to a battery swapping device and a battery charging and swapping station including same.

### Technical Background

Battery swapping is a rapid energy replenishment method for electric vehicles, which specifically involves removing a traction battery of an electric vehicle and immediately swapping the traction battery for another one through a battery swapping device. A battery charging and swapping station is a facility designed for traction battery swapping for electric vehicles.

The battery charging and swapping station mainly includes a battery compartment and the battery swapping device. The battery compartment is mainly configured to store batteries, and the battery swapping device is mainly configured to remove drained batteries from electric vehicles and mount fully charged ones. Some battery swapping devices can transport drained batteries to the battery compartment and deliver fully charged batteries in the battery compartment to a place below the electric vehicles.

The battery swapping device mainly includes locking and unlocking mechanisms. The locking and unlocking mechanisms can remove a drained battery from an electric vehicle by unlocking fasteners fixing the traction battery, and mount a fully charged battery to the electric vehicle by tightening the fasteners.

A plurality of fasteners are typically arranged for fastening a traction battery. In order to improve the battery swapping efficiency, the battery swapping device typically includes a plurality of locking and unlocking mechanisms, and the locking and unlocking mechanisms correspond to the plurality of fasteners on the traction battery in position in a one-to-one manner and can operate on the plurality of fasteners simultaneously.

However, as the variety of electric vehicle models continues to increase, the specifications of the batteries used in different models may vary, and fasteners of batteries of different specifications may also vary in number and positioning. Existing battery swapping devices typically accommodate only one specification of battery, resulting in limited compatibility.

The patent with publication No. CN 216761517 U provides a battery pack mounting and dismounting mechanism. The battery pack mounting and dismounting mechanism includes a tray body and a plurality of torque guns located on the tray body. The plurality of torque guns correspond to a plurality of locking members on the traction battery pack in position in a one-to-one manner. The torque guns are configured to lock or unlock the plurality of locking members with the vehicle by applying torque to the locking members, such that the traction battery pack is mounted to or dismounted from the vehicle. The torque guns distributed all over the tray body can match locking members distributed in different positions on different traction battery packs. Hence, battery packs of different specifications and sizes of different vehicle models can be unlocked and locked, ensuring high compatibility and matching capabilities.

The above-mentioned patent provides the battery pack mounting and dismounting mechanism adaptable to batteries of different specifications and sizes. However, the torque guns of the battery pack mounting and dismounting mechanism disclosed in the patent are fixed to the tray body, and a bottom surface of the battery is generally lower than a bottom surface of a fastener. In a process of mounting or dismounting the battery, an idle torque gun will abut against the bottom surface of the battery, and will damage the battery. A great height difference between the bottom surface of the battery and the bottom surface of the fastener could not only lead to battery damage but also prevent the torque guns from properly engaging with the fasteners.

In view of that, a novel technical solution is needed in the art to solve the problem.

### Summary

The invention aims to solve the technical problem, that is, to solve the problem of poor compatibility of existing battery swapping devices.

In a first aspect, the invention provides a battery swapping device. The battery swapping device includes: a battery bearing platform, and a translation mechanism and a plurality of locking and unlocking mechanisms that are mounted on the battery bearing platform, where the translation mechanism is capable of driving at least some of the locking and unlocking mechanisms to move horizontally relative to the battery bearing platform, so as to enable the plurality of locking and unlocking mechanisms to adapt to traction batteries with different specifications.

In a preferred technical solution of the battery swapping device, the battery swapping device further includes a lifting mechanism mounted on the battery bearing platform, where the lifting mechanism is configured to be capable of driving the at least some of the locking and unlocking mechanisms to move vertically relative to the battery bearing platform.

In a preferred technical solution of the battery swapping device, the lifting mechanism includes a plurality of independent lifting driving units, and the lifting driving units are capable of driving corresponding locking and unlocking mechanisms to move vertically relative to the battery bearing platform.

In a preferred technical solution of the battery swapping device, the translation mechanism is further configured to be capable of driving at least some of the lifting driving units and corresponding locking and unlocking mechanisms to synchronously move horizontally relative to the battery bearing platform.

In a preferred technical solution of the battery swapping device, the translation mechanism includes a plurality of independent translation driving units, and the translation driving units are capable of driving corresponding lifting driving units and corresponding locking and unlocking mechanisms to synchronously move horizontally relative to the battery bearing platform.

In a preferred technical solution of the battery swapping device, the translation driving unit includes a first driving assembly, a first lead screw and a translation member, and the lifting driving unit and the locking and unlocking mechanism that correspond to the translation driving unit are both mounted on the translation member;

The first driving assembly and the first lead screw are both mounted on the battery bearing platform, the first lead screw is arranged in a horizontal direction, and the first driving assembly is capable of driving the first lead screw to rotate; and the translation member is mounted on the first lead screw and is in threaded connection to the first lead screw, and the translation member is capable of moving horizontally along the first lead screw along with rotation of the first lead screw.

In a preferred technical solution of the battery swapping device, the battery swapping device further includes a first guide mechanism mounted between the battery bearing platform and the translation member, where the first guide mechanism is capable of guiding the translation member in a process of the translation member moving relative to the battery bearing platform.

In a preferred technical solution of the battery swapping device, the first guide mechanism includes a first guide rail mounted on the battery bearing platform and a first guide block mounted on the translation member, the first guide rail is horizontally arranged in a movement direction of the translation member, and the first guide block is mounted on the first guide rail and is capable of sliding in a length direction of the first guide rail.

In a preferred technical solution of the battery swapping device, the translation member includes a first movement block, a horizontal plate and a vertical plate, the first movement block is fixedly connected to the horizontal plate and is in threaded connection to the first lead screw, a top end of the vertical plate is fixedly connected to the horizontal plate, and the lifting driving unit and the locking and unlocking mechanism are mounted on the vertical plate.

In a preferred technical solution of the battery swapping device, the lifting driving unit includes a second driving assembly, a second lead screw and a second movement block, and the second movement block is fixedly connected to the locking and unlocking mechanism; the second driving assembly and the second lead screw are both mounted on the vertical plate, the second lead screw is arranged in a vertical direction, and the second driving assembly is capable of driving the second lead screw to rotate; and the second movement block is mounted on the second lead screw and is in threaded connection to the second lead screw, and the second movement block is capable of moving vertically along the second lead screw along with rotation of the second lead screw.

In a preferred technical solution of the battery swapping device, a number of the vertical plates is two, the two vertical plates being arranged opposite each other in the horizontal direction, and the locking and unlocking mechanism is located between the two vertical plates; and the battery swapping device further includes a second guide mechanism mounted between the vertical plate and the locking and unlocking mechanism, and the second guide mechanism is capable of guiding the locking and unlocking mechanism in a process of the locking and unlocking mechanism moving relative to the vertical plate.

In a preferred technical solution of the battery swapping device, the second guide mechanism includes two sets of second guide rails and second guide blocks matching each other; the second guide rails are arranged in the vertical direction, and the second guide blocks are capable of sliding vertically along the second guide rails; and the two second guide rails are fixedly connected to corresponding vertical plates, respectively, and the two second guide blocks are fixedly connected to two opposite sides of the locking and unlocking mechanism, respectively.

In a preferred technical solution of the battery swapping device, the first driving assembly includes a first motor, a first driving gear, a first toothed transmission belt and a first driven gear that are mounted on the battery bearing platform; and the first driving gear is fixedly connected to a driving shaft of the first motor, the first driven gear is fixedly connected to an end of the first lead screw, and the first toothed transmission belt meshes with the first driving gear and the first driven gear.

In a preferred technical solution of the battery swapping device, the second driving assembly includes a second motor, a second driving gear, a second toothed transmission belt and a second driven gear that are mounted on the vertical plate; and the second driving gear is fixedly connected to a driving shaft of the second motor, the second driven gear is fixedly connected to an end of the second lead screw, and the second toothed transmission belt meshes with the second driving gear and the second driven gear.

In a preferred technical solution of the battery swapping device, the locking and unlocking mechanism includes a third driving assembly and a socket connector, and the third driving assembly is connected to the socket connector and is capable of driving the socket connector to rotate.

In a second aspect, the invention further provides a battery charging and swapping station. The battery charging and swapping station is equipped with the battery swapping device described above.

In the context of the aforementioned technical solution, the battery swapping device of the invention drives at least some of the locking and unlocking mechanisms to move by arranging the translation mechanism on a battery swapping platform. For batteries with different specifications and sizes, the locking and unlocking mechanisms can be moved to positions matching the batteries with different specifications, aligning the locking and unlocking mechanisms with fasteners of the batteries. Thus, the battery swapping device can mount and dismount a plurality of traction batteries with different specifications and sizes, enhancing the compatibility of the battery swapping device. In addition, compared with a battery pack mounting and dismounting mechanism provided by the patent with the publication No. CN 216761517 U, the battery swapping device of the invention has no excess locking and unlocking mechanism in the process of mounting and dismounting the battery, such that damage to the battery can be avoided. In addition, even if there is any excess locking and unlocking mechanism, the excess locking and unlocking mechanism can be moved by the translation mechanism to a position away from the battery to prevent any potential damage to the battery.

Further, according to the battery swapping device of the invention, the lifting mechanism capable of driving the locking and unlocking mechanism to move vertically relative to the battery bearing platform is arranged on the battery bearing platform. Thus, the battery swapping device is more flexible to use, the battery swapping device can adapt to more types of batteries, and the compatibility of the battery swapping device is further improved accordingly.

Further, the translation mechanism of the invention is further configured to be capable of driving at least some of the lifting driving units and corresponding locking and unlocking mechanisms to synchronously move horizontally relative to the battery bearing platform. By combining the translation mechanism with the lifting mechanism, the locking and unlocking mechanism can move both horizontally and vertically relative to the battery bearing platform. This allows for greater flexibility in adjustment and enhances ease of use.

Furthermore, based on the aforementioned technical solution, the battery charging and swapping station provided by the invention incorporates the battery swapping device, thereby achieving the technical effects associated with the battery swapping device. Compared with a battery charging and swapping station before improvement, the battery charging and swapping station of the invention can perform battery swapping for a variety of vehicle models, resulting in an enhanced user experience.

### Brief Description of Drawings

Preferred implementations of the invention are described below with reference to the accompanying drawings, in which:
FIG. 1 is a schematic diagram of a battery swapping device according to the invention;
FIG. 2 is a first schematic assembly diagram of a battery bearing platform, a locking and unlocking mechanism, a translation driving unit, a lifting driving unit and a first guide mechanism of the invention;
FIG. 3 is a second schematic assembly diagram of the battery bearing platform, the locking and unlocking mechanism, the translation driving unit, the lifting driving unit and the first guide mechanism of the invention;
FIG. 4 is a schematic assembly diagram of a locking and unlocking mechanism, a translation member, a lifting driving unit and a second guide mechanism of the invention;
FIG. 5 is a schematic assembly diagram of a battery bearing platform, a locking and unlocking mechanism, a translation member, a lifting driving unit and a second guide mechanism of the invention;
FIG. 6 is a first schematic assembly diagram of a second fixation plate, a locking and unlocking mechanism, a lifting driving unit and a third guide mechanism of the invention; and
FIG. 7 is a second schematic assembly diagram of the second fixation plate, the locking and unlocking mechanism, the lifting driving unit and the third guide mechanism of the invention.

List of reference signs:
1. battery bearing platform; 11. first fixation plate; 12. second fixation plate; 13. elongated opening; 2. locking and unlocking mechanism; 21. socket connector; 22. third motor; 23. speed reducer; 3. translation driving unit; 31. first driving assembly; 32. first lead screw; 33. translation member; 311. first motor; 312. first driving gear; 313. first toothed transmission belt; 314. first driven gear; 331. first movement block; 332. horizontal plate; 333. vertical plate; 3331. support base; 4. lifting driving unit; 41. second driving assembly; 42. second lead screw; 43. second movement block; 411. second motor; 412. second driving gear; 413. second toothed transmission belt; 414. second driven gear; 5. first guide mechanism; 51. first guide rail; 52. first guide block; 6. second guide mechanism; 61. second guide rail; 62. second guide block; 7. third guide mechanism; 61. third guide rail; and 62. third guide block.

### Detailed Description of Embodiments

Preferred implementations of the invention will be described below with reference to the accompanying drawings. Those skilled in the art should understand that these implementations are merely used to explain the technical principles of the invention, and are not intended to limit the scope of protection of the invention.

It should be noted that in the description of the invention, the terms, including "up", "down", "left", "right", "top", "bottom", etc., that indicate the directional or positional relation are based on the directional or positional relation shown in the figures, only for the convenience of description instead of indicating or implying that the apparatus or element must have a particular orientation and must be constructed and operated in a particular orientation, and therefore should not be construed as limitation to the invention. In addition, the terms "first", "second", and "third" are for descriptive purposes merely, and should not be interpreted as indicating or implying relative importance.

In addition, it should also be noted that in the description of the invention, the terms "arrange", "connect" and "mount" should be interpreted in a broad sense unless explicitly defined and limited otherwise. For example, these terms may denote a fixed connection, a detachable connection or an integral connection. For those skilled in the art, the specific meanings of the foregoing terms in the invention can be interpreted according to a specific situation.

The invention provides a battery charging and swapping station for traction battery swapping for vehicles. The battery charging and swapping station of the invention mainly includes a battery compartment and a battery swapping device. The battery compartment is mainly configured to store batteries, and the battery swapping device is mainly configured to dismount drained batteries from the vehicles and mount fully charged ones onto the vehicles.

It should be noted that in actual application, those skilled in the art may configure the battery swapping device as a rail guided vehicle (RGV), or may configure the battery swapping device as an automated guided vehicle (AGV). The adjustment and change of a specific type of the battery swapping device does not deviate from the principle and scope of the invention, and should fall within the scope of protection of the invention.

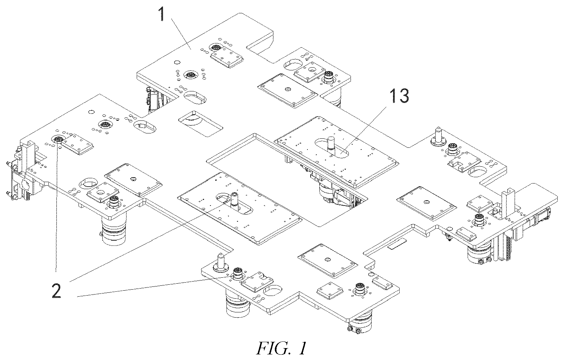

As shown in FIG. 1, the battery swapping device of the invention includes a battery bearing platform 1 and a plurality of locking and unlocking mechanisms 2 that are mounted on the battery bearing platform 1.

The battery bearing platform 1 may bear a battery. The locking and unlocking mechanism 2 may unlock a fastener fixing a traction battery, so as to remove the drained battery from the vehicle. The locking and unlocking mechanism 2 may further tighten the fastener, so as to mount a fully charged battery onto the vehicle.

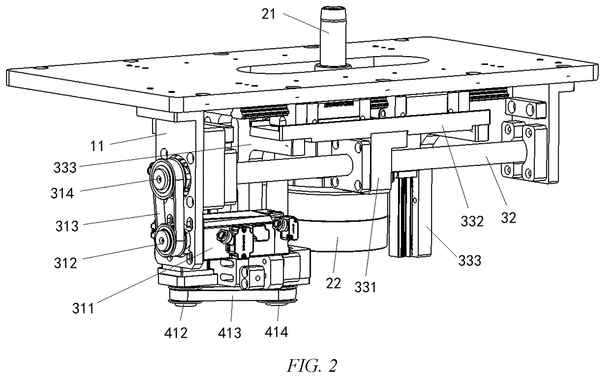

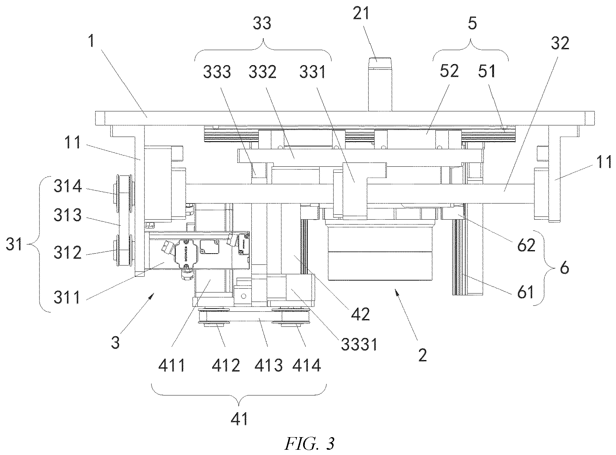

As shown in FIGs. 2 and 3, the battery swapping device of the invention further includes a translation mechanism that is mounted on the battery bearing platform 1. The translation mechanism is capable of driving at least some of the locking and unlocking mechanisms 2 to move horizontally relative to the battery bearing platform 1, so as to enable the plurality of locking and unlocking mechanisms 2 to adapt to traction batteries with different specifications.

The translation mechanism is arranged on a battery swapping platform to drive the locking and unlocking mechanism 2 to move. For batteries with different specifications and sizes, the locking and unlocking mechanisms 2 can be moved to positions matching the batteries with different specifications, aligning the locking and unlocking mechanisms 2 with fasteners of the batteries. Thus, the battery swapping device can mount and dismount a plurality of traction batteries with different specifications and sizes, enhancing the compatibility of the battery swapping device.

In addition, compared with a battery pack mounting and dismounting mechanism provided by the patent with the publication No. CN 216761517 U, the battery swapping device of the invention has no excess locking and unlocking mechanism 2 in the process of mounting and dismounting the battery, such that damage to the battery can be avoided. In addition, even if there is any excess locking and unlocking mechanism 2, the excess locking and unlocking mechanism 2 can be moved by the translation mechanism to a position away from the battery to prevent any potential damage to the battery.

It should be noted that in actual application, the translation mechanism may be configured to drive all the locking and unlocking mechanisms 2 to move, or the translation mechanism may be configured to merely drive some of the locking and unlocking mechanisms 2 to move. In addition, the translation mechanism may be configured to drive the plurality of locking and unlocking mechanisms 2 to move independently, or the translation mechanism may be configured to drive the plurality of locking and unlocking mechanisms 2 to move synchronously. Such flexible modifications and changes do not deviate from the principle and scope of the invention and should fall within the scope of protection of the invention.

It is clear that the translation mechanism is preferably configured to drive the plurality of locking and unlocking mechanisms 2 to move independently, positions of the locking and unlocking mechanisms 2 can be more advantageously adjusted, and adaption to batteries of more specification is achieved.

It should also be noted that in actual application, those skilled in the art may configure the translation mechanism as a manual translation mechanism, or may configure the translation mechanism as an electric translation mechanism, or may configure the translation mechanism as a hydraulic translation mechanism. Such modifications and changes to the specific type of the translation mechanism do not deviate from the principle and scope of the invention and should fall within the scope of protection of the invention.

In addition, it should be noted that all translation mechanisms are preferably arranged at a lower side of the battery bearing platform 1.

Preferably, as shown in FIGs. 2 to 7, the battery swapping device of the invention further includes a lifting mechanism mounted on the battery bearing platform 1. The lifting mechanism is configured to be capable of driving at least some of the locking and unlocking mechanisms 2 to move vertically relative to the battery bearing platform 1.

The lifting mechanism capable of driving the locking and unlocking mechanism 2 to move vertically relative to the battery bearing platform 1 is arranged on the battery bearing platform 1. Thus, the battery swapping device is more flexible to use, the battery swapping device can adapt to more types of batteries, and the compatibility of the battery swapping device is further improved accordingly.

It should be noted that in actual application, the lifting mechanism may be configured to drive all the locking and unlocking mechanisms 2 to move vertically, or the lifting mechanism may be configured to merely drive some of the locking and unlocking mechanisms 2 to move vertically. In addition, the lifting mechanism may be configured to drive the plurality of locking and unlocking mechanisms 2 to move vertically and independently from each other, or the lifting mechanism may be configured to drive the plurality of locking and unlocking mechanisms 2 to move vertically and synchronously with each other. Such flexible modifications and changes do not deviate from the principle and scope of the invention and should fall within the scope of protection of the invention.

It is clear that the lifting mechanism is preferably configured to drive the plurality of locking and unlocking mechanisms 2 to move vertically and independently from each other, so that positions of the locking and unlocking mechanisms 2 can be more advantageously adjusted, and adaption to batteries of more specification is achieved.

In addition, it should be noted that all lifting mechanisms are preferably arranged at a lower side of the battery bearing platform 1.

In addition, it should also be noted that in actual application, those skilled in the art may configure the lifting mechanism as a manual lifting mechanism, or may configure the lifting mechanism as an electric lifting mechanism, or may configure the lifting mechanism as a hydraulic lifting mechanism. Such modifications and changes to the specific type of the lifting mechanism do not deviate from the principle and scope of the invention and should fall within the scope of protection of the invention.

For example, as shown in FIG. 1, twelve locking and unlocking mechanisms 2 are arranged on the battery bearing platform 1. Two locking and unlocking mechanisms 2 are arranged in a middle position of the battery bearing platform 1, and the battery bearing platform 1 is provided with one elongated opening 13 at each of positions corresponding to the two locking and unlocking mechanisms 2 (the elongated opening 13 allows a socket connector 21 of the locking and unlocking mechanism 2 to move freely). The two locking and unlocking mechanisms 2 are connected to both the translation mechanism and the lifting mechanism, that is, the two locking and unlocking mechanisms 2 can move horizontally relative to the battery bearing platform 1 and also move vertically relative to the battery bearing platform 1. Four locking and unlocking mechanisms 2 are arranged at a left end of the battery bearing platform 1, and the four locking and unlocking mechanisms 2 are merely connected to the lifting mechanism but not connected to the translation mechanism, that is, the four locking and unlocking mechanisms 2 can merely move vertically relative to the battery bearing platform 1. The other six locking and unlocking mechanisms 2 are distributed at other positions of the battery bearing platform 1. The six locking and unlocking mechanisms 2 are neither connected to the translation mechanism nor the lifting mechanism.

It should be noted that in the example described above, all the twelve locking and unlocking mechanisms 2 may be connected to both the translation mechanism and the lifting mechanism, or some of the twelve locking and unlocking mechanisms 2 may be merely connected to the translation mechanism, and the rest may be merely connected to the lifting mechanism. Such flexible modifications and changes do not deviate from the principle and scope of the invention and should fall within the scope of protection of the invention.

Preferably, as shown in FIGs. 2 to 7, the lifting mechanism of the invention includes a plurality of independent lifting driving units 4, and the lifting driving units 4 are capable of driving corresponding locking and unlocking mechanisms 2 to move vertically relative to the battery bearing platform 1.

By providing the plurality of independent lifting driving units 4, the locking and unlocking mechanism 2 can move vertically relative to the battery bearing platform 1 independently.

For example, the lifting mechanism includes six independent lifting driving units 4, and each lifting driving unit 4 corresponds to one locking and unlocking mechanism 2, that is, six locking and unlocking mechanisms 2 may move vertically relative to the battery bearing platform 1.

Preferably, the translation mechanism of the invention is further configured to be capable of driving at least some of the lifting driving units 4 and corresponding locking and unlocking mechanisms 2 to synchronously move horizontally relative to the battery bearing platform 1.

The "synchronously move horizontally" indicates that the lifting driving unit 4 and corresponding locking and unlocking mechanism 2 synchronously move horizontally under the drive of the translation mechanism.

For example, the lifting mechanism includes six independent lifting driving units 4, each lifting driving unit 4 corresponds to one unlocking mechanism 2. First and second lifting driving units 4 are connected to the translation mechanism. Under the drive of the translation mechanism, the first lifting driving unit 4 and a first locking and unlocking mechanism 2 may synchronously move horizontally relative to the battery bearing platform 1, and the second lifting driving unit 4 and a second locking and unlocking mechanism 2 may synchronously move horizontally relative to battery bearing platform 1. The first lifting driving unit 4 may drive the first locking and unlocking mechanism 2 to move vertically relative to battery bearing platform 1, and the second lifting driving unit 4 may drive the second locking and unlocking mechanism 2 to move vertically relative to battery bearing platform 1.

It should be noted that in the example described above, the translation mechanism may be configured to be capable of driving the first lifting driving unit 4 and the second lifting driving unit 4 to move horizontally and independently from each other, or the translation mechanism may also be configured to be capable of driving the first lifting driving unit 4 and the second lifting driving unit 4 to move horizontally and synchronously with each other.

Preferably, as shown in FIGs. 2 to 5, the translation mechanism of the invention includes a plurality of independent translation driving units 3, and the translation driving units 3 are capable of driving corresponding lifting driving units 4 and corresponding locking and unlocking mechanisms 2 to synchronously move horizontally relative to the battery bearing platform 1.

For example, the translation mechanism includes two independent translation driving units 3. A first translation driving unit 3 may drive the first lifting driving unit 4 and the first locking and unlocking mechanism 2 to synchronously move horizontally relative to the battery bearing platform 1, and a second translation driving unit 3 may drive the second lifting driving unit 4 and the second locking and unlocking mechanism 2 to synchronously move horizontally relative to the battery bearing platform 1.

Preferably, as shown in FIGs. 2 to 5, the translation driving unit 3 of the invention includes a first driving assembly 31, a first lead screw 32 and a translation member 33, and the lifting driving unit 4 and the locking and unlocking mechanism 2 that correspond to the translation driving unit 3 are both mounted on the translation member 33.

The first driving assembly 31 and the first lead screw 32 are both mounted on the battery bearing platform 1, the first lead screw 32 is arranged in a horizontal direction, and the first driving assembly 31 is capable of driving the first lead screw 32 to rotate. The translation member 33 is mounted on the first lead screw 32 and is in threaded connection to the first lead screw 32, and the translation member 33 is capable of driving, along the first lead screw 32 along with rotation of the first lead screw 32, the lifting driving unit 4 and the locking and unlocking mechanism 2 to move horizontally.

In a specific application, the first lead screw 32 may be driven to rotate at first by the first driving assembly 31. During the rotation of the first lead screw 32, the translation member 33 drive the lifting driving unit 4 and the locking and unlocking mechanism 2 to synchronously move horizontally. After the locking and unlocking mechanism 2 moves to a position directly below the fastener of the battery, the lifting driving unit 4 drives the locking and unlocking mechanism 2 to move upwards, so as to lift the locking and unlocking mechanism 2 to a locking and unlocking position to engage with the fastener.

It should be noted that in actual application, those skilled in the art may configure the first driving assembly 31 as a combined structure of a motor and a gear transmission system, or as a combined structure of a motor and a transmission belt, or as a combined structure of a motor and a sprocket chain. Such modifications and changes to the specific structural form of the first driving assembly 31 do not deviate from the principle and scope of the invention and should fall within the scope of protection of the invention.

Preferably, as shown in FIGs. 2 and 3, the first driving assembly 31 includes a first motor 311, a first driving gear 312, a first toothed transmission belt 313 and a first driven gear 314 that are mounted on the battery bearing platform 1.

The first driving gear 312 is fixedly connected to a driving shaft of the first motor 311, the first driven gear 314 is fixedly connected to an end of the first lead screw 32, and the first toothed transmission belt 313 meshes with the first driving gear 312 and the first driven gear 314.

For example, as shown in FIGs. 2 and 3, a bottom surface of the battery bearing platform 1 is provided with two first fixation plates 11 that are arranged opposite each other in the horizontal direction at a position corresponding to the first driving assembly 31, and two ends of the first lead screw 32 are rotatably connected to the two first fixation plates 11. The first motor 311 is mounted on one of the first fixation plates 11 and is located directly below the first lead screw 32, and the driving shaft of the first motor 311 is horizontally arranged. The first driving gear 312 is located directly below the first driven gear 314. The first motor 311 drives the first driving gear 312 to rotate. The first driving gear 312 drives the first driven gear 314 to rotate through the first toothed transmission belt 313, and the first driven gear 314 drives the first lead screw 32 to rotate.

Preferably, as shown in FIG. 3, the battery swapping device of the invention further includes a first guide mechanism 5 mounted between the battery bearing platform 1 and the translation member 33. The first guide mechanism 5 is capable of guiding the translation member 33 in a process of the translation member 33 moving horizontally relative to the battery bearing platform 1.

It should be noted that in actual application, those skilled in the art may configure the first guide mechanism 5 as a mechanism in which a guide column and a guide tube match each other, or may configure the first guide mechanism 5 as a mechanism in which a guide block and a guide rail match each other, or may configure the first guide mechanism 5 as a structure in which a guide recess and a guide block match each other. Such modifications and changes to the specific structural form of the first guide mechanism 5 do not deviate from the principle and scope of the invention and should fall within the scope of protection of the invention.

Preferably, as shown in FIG. 3, the first guide mechanism 5 includes a first guide rail 51 mounted on the battery bearing platform 1 and a first guide block 52 mounted on the translation member 33, the first guide rail 51 is horizontally arranged in a movement direction of the translation member 33, and the first guide block 52 is mounted on the first guide rail 51 and is capable of sliding in a length direction of the first guide rail 51.

For example, a number of the first guide rails 51 is two, and the two first guide rails 51 are arranged in parallel. The two first guide rails are both fixedly mounted on the bottom surface of the battery bearing platform 1. A number of the first guide blocks 52 is also two, and the two first guide blocks 52 are both mounted on a top surface of the translation member 33.

Preferably, as shown in FIGs. 2 to 5, the translation member 33 includes a first movement block 331, a horizontal plate 332 and a vertical plate 333, the first movement block 331 is fixedly connected to the horizontal plate 332 and is in threaded connection to the first lead screw 32, a top end of the vertical plate 333 is fixedly connected to the horizontal plate 332, and the lifting driving unit 4 and the locking and unlocking mechanism 2 are both mounted on the vertical plate 333.

A threaded hole (not shown in the figure) is provided in the first movement block 331. The first movement block 331 is in threaded connection to the first lead screw 32 through the threaded hole. A top end of the first movement block 331 is fixedly connected to a bottom surface of the horizontal plate 332, and the first guide block 52 is mounted on a top surface of the horizontal plate 332.

Preferably, as shown in FIGs. 2 to 5, the lifting driving unit 4 of the invention includes a second driving assembly 41, a second lead screw 42 and a second movement block 43, and the second movement block 43 is fixedly connected to the locking and unlocking mechanism 2. The second driving assembly 41 and the second lead screw 42 are both mounted on the vertical plate 333, the second lead screw 42 is arranged in a vertical direction, and the second driving assembly 41 is capable of driving the second lead screw 42 to rotate. The second movement block 43 is mounted on the second lead screw 42 and is in threaded connection to the second lead screw 42, and the second movement block 43 is capable of driving, along the second lead screw 42 along with rotation of the second lead screw 42, the locking and unlocking mechanism 2 to move vertically.

A threaded hole (not shown in the figure) is provided in the second movement block 43. The second movement block 43 is in threaded connection to the second lead screw 42 through the threaded hole, and the second driving assembly 41 may drive the second lead screw 42 to rotate. During the rotation of the second lead screw 42, the second movement block 43 drives the locking and unlocking mechanism 2 to move vertically along the second lead screw 42.

It should be noted that in actual application, those skilled in the art may configure the second driving assembly 41 as a combined structure of a motor and a gear transmission system, or as a combined structure of a motor and a transmission belt, or as a combined structure of a motor and a sprocket chain. Such modifications and changes to the specific structural form of the second driving assembly 41 do not deviate from the principle and scope of the invention and should fall within the scope of protection of the invention.

Preferably, as shown in FIGs. 2 to 5, the second driving assembly 41 includes a second motor 411, a second driving gear 412, a second toothed transmission belt 413 and a second driven gear 414 that are mounted on the vertical plate 333.

The second driving gear 412 is fixedly connected to a driving shaft of the second motor 411, the second driven gear 414 is fixedly connected to an end of the second lead screw 42, and the second toothed transmission belt 413 meshes with the second driving gear 412 and the second driven gear 414.

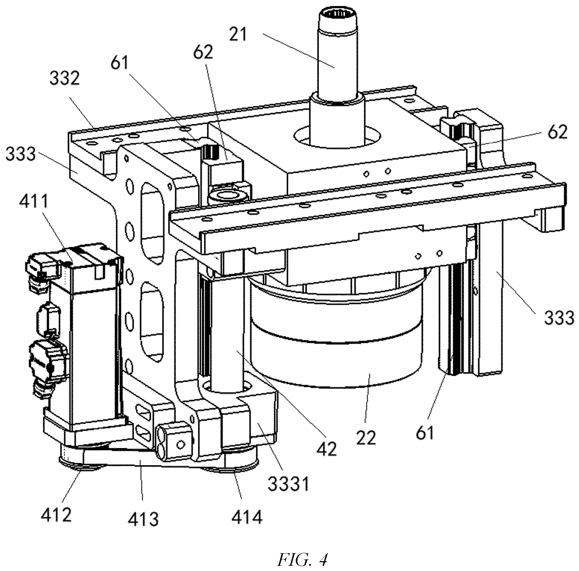

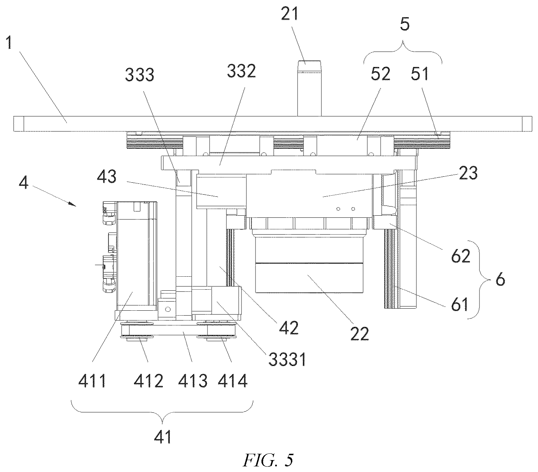

For example, as shown in FIGs. 4 and 5, a support base 3331 is arranged on the vertical plate 333, a through hole is provided in the support base 3331, and a bearing is mounted in the through hole. The second lead screw 42 is mounted in the bearing, and a bottom end of the second lead screw 42 passes through the bearing. The second driven gear 414 is mounted at the bottom end of the second lead screw 42, and the driving shaft of the second motor 411 is vertically arranged. The second driving gear 412 and the second driven gear 414 are located at the same height. The second motor 411 drives the second driving gear 412 to rotate, the second driving gear 412 drives the second driven gear 414 to rotate through the second toothed transmission belt 413, and the second driven gear 414 drives the second lead screw 42 to rotate.

Preferably, as shown in FIGs. 4 and 5, a number of the vertical plates 333 is two. The two vertical plates 333 are arranged opposite each other in the horizontal direction, and the locking and unlocking mechanism 2 is located between the two vertical plates 333. The battery swapping device further includes a second guide mechanism 6 mounted between the vertical plate 333 and the locking and unlocking mechanism 2, and the second guide mechanism 6 is capable of guiding the locking and unlocking mechanism 2 in a process of the locking and unlocking mechanism 2 moving vertically relative to the vertical plate 333.

In the process of driving the locking and unlocking mechanism 2 to move vertically relative to the battery bearing platform 1 by the lifting driving unit 4, the locking and unlocking mechanism 2 can be guided by the second guide mechanism 6, preventing any misalignment of the locking and unlocking mechanism 2. Thus, the locking and unlocking mechanism 2 can smoothly engage with the fastener of the battery.

It should be noted that in actual application, those skilled in the art may configure the second guide mechanism 6 as a mechanism in which a guide column and a guide tube match each other, or may configure the second guide mechanism 6 as a mechanism in which a guide block and a guide rail match each other, or may configure the second guide mechanism 6 as a structure in which a guide recess and a guide block match each other. Such modifications and changes to the specific structural form of the second guide mechanism 6 do not deviate from the principle and scope of the invention and should fall within the scope of protection of the invention.

Preferably, as shown in FIGs. 4 and 5, the second guide mechanism 6 includes two sets of second guide rails 61 and second guide blocks 62 matching each other. The second guide rails 61 are arranged in the vertical direction, and the second guide blocks 62 are capable of sliding vertically along the second guide rails 61. The two second guide rails 61 are fixedly connected to corresponding vertical plates 333, respectively, and the two second guide blocks 62 are fixedly connected to two opposite sides of the locking and unlocking mechanism 2, respectively.

For example, the two vertical plates 333 are located at a left side and a right side of the locking and unlocking mechanism 2, respectively, one second guide rail 61 is mounted at an inner side of each vertical plate 333, and one adaptive second guide block 62 is mounted on each second guide rail 61. The two second guide blocks 62 are fixedly connected to a left side surface and a right side surface of the locking and unlocking mechanism 2, respectively.

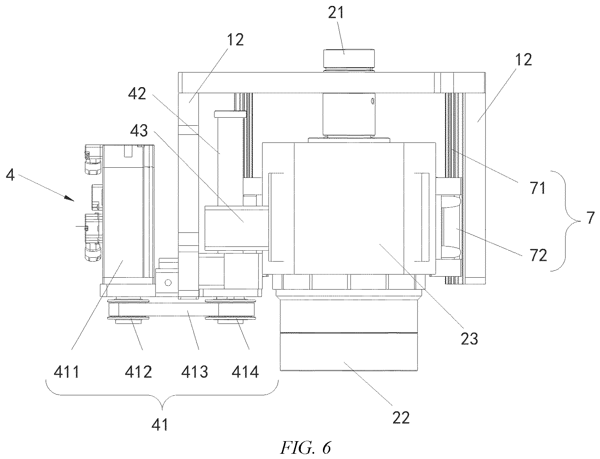

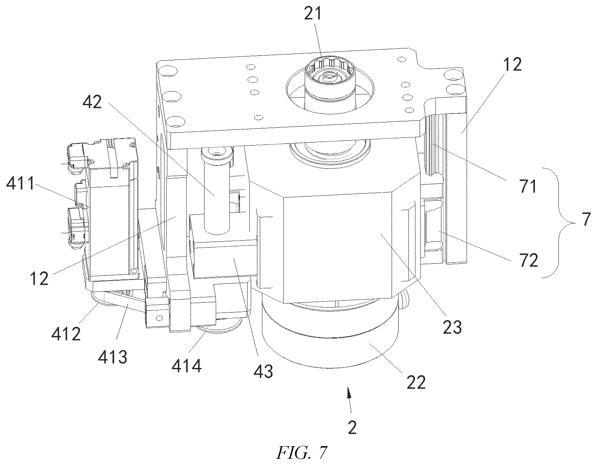

It should be noted that FIGs. 2 to 5 show the lifting driving unit 4 connected to the translation mechanism. In the invention, some lifting driving units 4 are not connected to the translation mechanism, as shown in FIGs. 6 and 7. Such lifting driving units 4 are mounted on the battery bearing platform 1, and a specific structure of such lifting driving units 4 is identical to a specific structure of the lifting driving unit 4 described above.

For example, as shown in FIGs. 6 and 7, the bottom surface of the battery bearing platform 1 is provided with two second fixation plates 12 that are arranged opposite each other in the horizontal direction at a position corresponding to the lifting driving unit 4, and the locking and unlocking mechanism 2 is located between the two second fixation plates 12. The second driving assembly 41 and the second lead screw 42 of the lifting driving unit 4 are both mounted on one of the second fixation plates 12.

Preferably, as shown in FIGs. 6 and 7, the battery swapping device further includes a third guide mechanism 7 mounted between the second fixation plate 12 and the locking and unlocking mechanism 2, and the third guide mechanism 7 may guide the locking and unlocking mechanism 2 in a process of the locking and unlocking mechanism 2 moving vertically relative to the second fixation plate 12.

The third guide mechanism 7 includes two sets of third guide rails 71 and third guide blocks 72 matching each other. The third guide rails 71 are arranged in the vertical direction, and the third guide blocks 72 are capable of sliding vertically along the third guide rails 71. The two third guide rails 71 are fixedly connected to corresponding second fixation plates 12, respectively, and the two third guide blocks 72 are fixedly connected to two opposite sides of the locking and unlocking mechanism 2, respectively.

Preferably, as shown in FIGs. 2 to 7, the locking and unlocking mechanism 2 of the invention includes a third driving assembly and a socket connector 21, and the third driving assembly is connected to the socket connector 21 and is capable of driving the socket connector 21 to rotate.

The socket connector 21 matches the fastener of the traction battery in shape. After completion of engagement of the socket connector 21 with the fastener, the third driving assembly drives the socket connector 21 to drive the fastener to rotate, so as to unlock or tighten the fastener.

Preferably, as shown in FIGs. 2 to 7, the third driving assembly of the invention includes a third motor 22 and a speed reducer 23, a bottom end of the speed reducer 23 is fixedly connected to a driving shaft of the third motor 22, and a top end of the speed reducer 23 is connected to the socket connector 21. A housing of the speed reducer 23 may be fixedly connected to the second movement block 43 and the second guide block 62.

Those skilled in the art can understand that although some embodiments described herein include some but not other features included in other embodiments, combinations of features of different embodiments are meant to fall within the scope of the invention and form different embodiments. For example, in the claims of the invention, any one of the claimed embodiments can be used in any combination.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art can make equivalent changes or replacements to related technical features. The technical solutions obtained after these changes or replacements should fall within the scope of protection of the invention.

## Claims

1. A battery swapping device, comprising: a battery bearing platform, and a translation mechanism and a plurality of locking and unlocking mechanisms that are mounted on the battery bearing platform, wherein
the translation mechanism is capable of driving at least some of the locking and unlocking mechanisms to move horizontally relative to the battery bearing platform, so as to enable the plurality of locking and unlocking mechanisms to adapt to traction batteries with different specifications.

2. The battery swapping device according to claim 1, further comprising a lifting mechanism mounted on the battery bearing platform, wherein the lifting mechanism is configured to be capable of driving the at least some of the locking and unlocking mechanisms to move vertically relative to the battery bearing platform.

3. The battery swapping device according to claim 2, wherein the lifting mechanism comprises a plurality of independent lifting driving units, and the lifting driving units are capable of driving corresponding locking and unlocking mechanisms to move vertically relative to the battery bearing platform.

4. The battery swapping device according to claim 3, wherein the translation mechanism is further configured to be capable of driving at least some of the lifting driving units and corresponding locking and unlocking mechanisms to synchronously move horizontally relative to the battery bearing platform.

5. The battery swapping device according to claim 4, wherein the translation mechanism comprises a plurality of independent translation driving units, and the translation driving units are capable of driving corresponding lifting driving units and corresponding locking and unlocking mechanisms to synchronously move horizontally relative to the battery bearing platform.

6. The battery swapping device according to claim 5, wherein the translation driving unit comprises a first driving assembly, a first lead screw and a translation member, and the lifting driving unit and the locking and unlocking mechanism that correspond to the translation driving unit are both mounted on the translation member;
the first driving assembly and the first lead screw are both mounted on the battery bearing platform, the first lead screw is arranged in a horizontal direction, and the first driving assembly is capable of driving the first lead screw to rotate; and
the translation member is mounted on the first lead screw and is in threaded connection to the first lead screw, and the translation member is capable of moving horizontally along the first lead screw along with rotation of the first lead screw.

7. The battery swapping device according to claim 6, further comprising a first guide mechanism mounted between the battery bearing platform and the translation member, wherein the first guide mechanism is capable of guiding the translation member in a process of the translation member moving horizontally relative to the battery bearing platform.

8. The battery swapping device according to claim 7, wherein the first guide mechanism comprises a first guide rail mounted on the battery bearing platform and a first guide block mounted on the translation member, the first guide rail is horizontally arranged in a movement direction of the translation member, and the first guide block is mounted on the first guide rail and is capable of sliding in a length direction of the first guide rail.

9. The battery swapping device according to claim 6, wherein the translation member comprises a first movement block, a horizontal plate and a vertical plate, the first movement block is fixedly connected to the horizontal plate and is in threaded connection to the first lead screw, a top end of the vertical plate is fixedly connected to the horizontal plate, and the lifting driving unit and the locking and unlocking mechanism are both mounted on the vertical plate.

10. The battery swapping device according to claim 9, wherein the lifting driving unit comprises a second driving assembly, a second lead screw and a second movement block, and the second movement block is fixedly connected to the locking and unlocking mechanism;
the second driving assembly and the second lead screw are both mounted on the vertical plate, the second lead screw is arranged in a vertical direction, and the second driving assembly is capable of driving the second lead screw to rotate; and
the second movement block is mounted on the second lead screw and is in threaded connection to the second lead screw, and the second movement block is capable of moving vertically along the second lead screw along with rotation of the second lead screw.

11. The battery swapping device according to claim 9, wherein a number of the vertical plates is two, the two vertical plates being arranged opposite each other in the horizontal direction, and the locking and unlocking mechanism is located between the two vertical plates; and the battery swapping device further comprises a second guide mechanism mounted between the vertical plate and the locking and unlocking mechanism, and the second guide mechanism is capable of guiding the locking and unlocking mechanism in a process of the locking and unlocking mechanism moving vertically relative to the vertical plate.

12. The battery swapping device according to claim 11, wherein the second guide mechanism comprises two sets of second guide rails and second guide blocks matching each other; the second guide rails are arranged in the vertical direction, and the second guide blocks are capable of sliding vertically along the second guide rails; and the two second guide rails are fixedly connected to corresponding vertical plates, respectively, and the two second guide blocks are fixedly connected to two opposite sides of the locking and unlocking mechanism, respectively.

13. The battery swapping device according to claim 6, wherein the first driving assembly comprises a first motor, a first driving gear, a first toothed transmission belt and a first driven gear that are mounted on the battery bearing platform; and
the first driving gear is fixedly connected to a driving shaft of the first motor, the first driven gear is fixedly connected to an end of the first lead screw, and the first toothed transmission belt meshes with the first driving gear and the first driven gear.

14. The battery swapping device according to claim 10, wherein the second driving assembly comprises a second motor, a second driving gear, a second toothed transmission belt and a second driven gear that are mounted on the vertical plate; and
the second driving gear is fixedly connected to a driving shaft of the second motor, the second driven gear is fixedly connected to an end of the second lead screw, and the second toothed transmission belt meshes with the second driving gear and the second driven gear.

15. The battery swapping device according to any one of claims 1 to 14, wherein the locking and unlocking mechanism comprises a third driving assembly and a socket connector, and the third driving assembly is connected to the socket connector and is capable of driving the socket connector to rotate.

16. A battery charging and swapping station, comprising the battery swapping device according to any one of claims 1 to 15.
